(19) Europäisches Patentamt / European Patent Office / Office européen des brevets

(11) **EP 2 808 038 A1**

(12) **DEMANDE DE BREVET EUROPEEN**

(43) Date de publication:
**03.12.2014 Bulletin 2014/49**

(21) Numéro de dépôt: **14170355.3**

(22) Date de dépôt: **28.05.2014**

(51) Int Cl.:
*A61L 9/014* (2006.01)      *B01D 53/72* (2006.01)
*C09D 5/00* (2006.01)      *C09D 167/08* (2006.01)
*C09D 133/02* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **31.05.2013 FR 1354994**

(71) Demandeur: **Omnium National Industriel des Peintures**
**94270 Kremlin Bicetre (FR)**

(72) Inventeurs:
• **Verlhac, Patrick**
  **27520 BOURGTHEROULDE-INFREVILLE (FR)**
• **Raymond, Arnaud**
  **27400 HONDOUVILLE (FR)**
• **Barthalot, Cyrille**
  **27430 SAINT ETIENNE DU VAUVRAY (FR)**

(74) Mandataire: **Brizio Delaporte, Allison et al**
**Cabinet Hautier**
**20, rue de la Liberté**
**06000 Nice (FR)**

(54) **Peinture ou vernis pour assainir de l'air en fixant le formaldéhyde**

(57) La présente invention concerne une peinture ou un vernis pour assainir l'air caractérisée en ce qu'elle comprend un liant comprenant un polymère acrylique ou alkyde portant au moins une fonction fixatrice de formaldéhyde destinée à réagir avec du formaldéhyde présent dans l'air pour le fixer de manière covalente et des additifs.

Elle trouvera son application pour les peintures ou vernis décoratifs pour murs, plafonds, boiseries, sols ou industriels pour sols ou ameublements pouvant être appliquées sur divers supports pour assainir la qualité de l'air intérieur d'une pièce en fixant le formaldéhyde libre.

EP 2 808 038 A1

**Description**

La présente invention concerne une peinture ou un vernis pour assainir l'air comprenant un liant portant une fonction fixatrice de formaldéhyde de l'air.

Elle trouvera son application pour les peintures ou vernis décoratifs pour murs, plafonds, boiseries, sols ou industriels pour sols ou ameublements pouvant être appliquées sur divers supports pour assainir la qualité de l'air intérieur d'une pièce en fixant le formaldéhyde libre.

En effet, l'air intérieur est un enjeu majeur de santé publique. Il est 5 à 10 fois plus pollué que l'air extérieur. Plusieurs composés organiques volatils sont cités notamment le benzène et le formaldéhyde.

Le formaldéhyde est un polluant très répandu dans l'air intérieur. Il provient de différentes sources comme les meubles, les tapis, les cuissons ménagères, les textiles d'ameublement, les fumées de cigarette, le contre-plaqué, les panneaux mélaminés, etc.... Depuis 2004, il est classé comme cancérogène par le CIRC (Centre International de Recherche contre le Cancer). Le formaldéhyde provoque des irritations et des inflammations des yeux, des voies respiratoires et de la peau. Il peut également avoir des conséquences neurologiques qui se traduisent par une fatigue accrue, des migraines, des nausées et des vertiges.

La principale solution proposée à ce jour sont des filtres placés dans les pièces à assainir et au travers desquels l'air qui circule est débarrassé du formaldéhyde présent.

L'efficacité de ces filtres est limitée par le flux d'air les traversant et une faible surface spécifique de contact. Ce flux est le plus souvent amélioré par une pompe, ce qui entraîne une consommation d'énergie et une pollution sonore plus importante. De plus, ces filtres sont particulièrement inesthétiques. Selon la concentration du formaldéhyde présent, les filtres sont rapidement saturés et il faut alors les changer pour maintenir l'assainissement.

Des solutions d'assainissement utilisent des nanoparticules décomposant des composés organiques volatils (COV) tel le formaldéhyde de l'air par photocatalyse. Les nanoparticules sont placées par exemple dans des revêtements. Cette technique présente de nombreux inconvénients. Notamment la captation des COV nécessite une exposition à la lumière. De plus la désorption des COV captés est élevée dans le temps et les nanoparticules sont elles-mêmes aisément désolidarisées de leur support et sont donc relarguées dans l'environnement. Le grand public n'est pas prêt à utiliser des produits à base de nanoparticules du fait de leur éventuelle toxicité.

Il existe donc le besoin de proposer une solution pour assainir l'air intérieur qui résolve tout ou partie de ces inconvénients.

A cet effet, la présente invention concerne une peinture ou un vernis pour assainir l'air comprenant un liant comprenant un polymère acrylique ou alkyde portant au moins une fonction fixatrice de formaldéhyde destinée à réagir avec du formaldéhyde présent dans l'air pour le fixer de manière covalente et des additifs.

A titre d'exemple, la fonction fixatrice du formaldéhyde est une fonction acétoacétate.

Cette peinture ou vernis présente l'avantage de fixer de manière permanente et irréversible le formaldéhyde de l'air. Le formaldéhyde se fixe de manière covalente, il n'y a pas de rejet ultérieur de formaldéhyde et ce notamment du fait que le liant est stable. En effet, le liant comprend un polymère donc avec un poids moléculaire élevé limitant sa migration ou sa modification au cours du temps.

La peinture ou le vernis est un élément particulièrement présent dans l'habitat ce qui permet d'avoir des surfaces recouvertes de peinture ou vernis et donc des surfaces actives importantes tout en étant non invasives.

On entend par additifs, tous les autres constituants de la peinture ou vernis dont par exemple les charges, les solvants, les pigments, les adjuvants.

Suivant des variantes préférées mais non limitatives pouvant être cumulatives ou alternatives, la peinture ou le vernis selon l'invention est tel que :
- Il présente la formulation suivante :

| Matière première | Teneur (%m/m) |
|---|---|
| Liant | 20 - 50 |
| Biocide | 0,25 |
| Epaississant | 1 - 3 |
| Dispersant | 0,3 |
| Carbonate | 0 - 10 |
| Talc | 0 - 15 |
| Dioxyde de titane | 15 - 25 |
| Agent neutralisant | 0,3 |

(suite)

| Matière première | Teneur (%m/m) |
|---|---|
| Propylène glycol | 0,3 - 0,6 |
| Agent temps ouvert | 1 - 2 |
| Eau | 6 -16 |

Les fournisseurs indiqués ci-dessous sont fournis à titre d'exemple uniquement et ne sont en aucun cas limitatifs.

| Matière première | Teneur (%m/m) | Fournisseur |
|---|---|---|
| Liant | 20 - 50 | Ecoat |
| Biocide | 0,25 | Dow |
| Epaississant | 1 - 3 | Dow |
| Dispersant | 0,3 | Byk |
| Carbonate | 0 - 10 | Omya |
| Talc | 0 - 15 | Imerys |
| Dioxyde de titane | 15 - 25 | Hunstman |
| Agent neutralisant | 0,3 | Brenntag |
| Propylène glycol | 0,3 - 0,6 | Brenntag |
| Agent temps ouvert | 1 - 2 | Eastman |
| Eau | 7 - 16 | |

- le pourcentage d'abattement de formaldéhyde de l'air est d'au moins 30% après 24H d'exposition,
- la désorption est inférieure à 5$\mu$g/m$^3$, plus précisément jusqu' à 48h après application.

D'autres buts et avantages apparaitront au cours de la description de l'invention qui suit.

A titre préféré, la peinture ou le vernis formulé selon l'invention a pour caractéristiques techniques :

| Densité (g/l) | Viscosité ICI (Poise) | Viscosité MS3 | pH | Brillance | Extrait sec massique (%) | Extrait sec volumique (%) |
|---|---|---|---|---|---|---|
| 1,30-1,60 | 3,2 - 3,7 | 40 - 50 | 8 - 9 | Moins de 3% sous 85° jusqu'à plus de 80% sous 20° | 55 - 63 | 41 - 45 |

A titre préféré, la peinture ou le vernis selon l'invention présente un abattement d'au moins 30% à 24h du formaldéhyde présent dans l'air.

La peinture ou le vernis selon l'invention présente préférentiellement une désorption quasi nulle, inférieure à 5$\mu$g/m$^3$, plus précisément jusqu'à 48 heures après application. Ceci est particulièrement avantageux car la peinture par l'intermédiaire de son liant fixe de manière covalente le formaldéhyde. Cette fixation est permanente, il n'y a pas de rejet ultérieur de formaldéhyde et ce notamment du fait que le liant est stable. En effet, le liant comprend un polymère donc avec un poids moléculaire élevé limitant sa migration ou sa modification au cours du temps.

Avantageusement, la peinture ou le vernis selon l'invention présente une durée de vie d'au moins 5 ans. On entend par durée de vie que la peinture n'est pas saturée de formaldéhyde et peut encore jouer un rôle d'assainissement de l'air.

Suivant un autre aspect, l'invention concerne un procédé pour assainir l'air caractérisé en ce qu'on applique une peinture ou un vernis, comprenant préférentiellement un liant, telle que décrite précédemment, et que la fonction fixatrice de formaldéhyde réagit avec du formaldéhyde présent dans l'air et le fixe de manière covalente. Préférentiellement, le pourcentage d'abattement de formaldéhyde de l'air est d'au moins 30% à 24H d'exposition.

Suivant des variantes préférées mais non limitatives pouvant être cumulatives ou alternatives, le procédé selon l'invention est tel que :

- on forme un feuil continu de peinture ;
- l'épaisseur sèche totale de la peinture est comprise entre 0,1 et 0,2mm ;
- la peinture est appliquée sur un support fermé ;
- il n'y a pas de flux d'air traversant le support et la peinture.

La peinture ou le vernis selon l'invention est destinée à fixer le formaldéhyde de l'air. On entend par formaldéhyde de l'air, le formaldéhyde à l'état gazeux libre. L'air est préférentiellement de l'air intérieur d'une habitation ou d'un bâtiment.

Le liant selon l'invention comprenant un polymère acrylique ou alkyde portant au moins une fonction fixatrice de formaldéhyde de l'air, est incorporé dans une matrice complexe de peinture ou de vernis.

Une peinture ou un vernis est un mélange complexe de plusieurs composés différents. Ces composés sont classiquement regroupés sous 5 familles : pigment, solvant, charge, liant et adjuvant. Les pigments sont par exemple des poudres comme le dioxyde de titane pour apporter de l'opacité, du couvrant, au feuil de peinture et de la blancheur. Certains peuvent être colorés, d'autres ont une fonction anti-UV, anticorrosion. Les solvants sont par exemple l'eau, des dérivés pétrochimiques avec des fonctions polaires ou aliphatiques. Ils régulent la rhéologie du produit et la viscosité de la peinture lors de l'application. Les charges sont par exemple des poudres comme le carbonate de calcium, le kaolin, le talc, qui jouent sur la brillance, la structure du feuil de peinture et sur l'onctuosité. Le liant également dénommé résine, est un composé non volatile et peut être d'origine pétrolière ou végétale. Il est là pour lier toutes les particules poudreuses (pigment et charge) sans les dissoudre. Il participe aussi à la brillance et la résistance mécanique voire chimique du feuil de peinture. Enfin, les adjuvants sont composés par exemple biocides pour une protection en pot et du feuil, épaississants, agents anti- mousse, agents dispersants, promoteurs d'adhérence, tensio-actifs.

La peinture ou le vernis est filmogène. C'est-à-dire qu'elle est apte à former un feuil. Le feuil est un revêtement de faible épaisseur. Selon l'invention, le feuil est continu sur le support. C'est-à-dire qu'il forme un revêtement, un film, qui n'est pas interrompu par la structure du support.

Dans la description le terme peinture peut être employé seul à la place de peinture ou vernis. On entend par vernis également les lasures.

La présente invention a l'avantage de pouvoir être utilisée simplement par toute personne voulant assainir l'air de son environnement. En effet, la peinture présente des caractéristiques classiques des peintures notamment des peintures décoratives. Elle peut être une peinture mate, veloutée, satinée ou brillante et se décliner dans toute les couleurs habituelles des nuanciers, elle s'applique classiquement à la brosse, au rouleau ou applicateur mécanique.

Selon l'invention la peinture présente un pouvoir assainissant dés son application, plus précisément dés que la peinture est sèche soit au moins 1 heure après application.

La peinture nécessite une seule couche de peinture pour assainir l'air. Toutefois, il est possible d'appliquer plusieurs couches notamment pour des questions de couvrance de support sans effet sur le pouvoir d'assainissement de la peinture. Chaque couche permet de déposée de 100 à 200g/m$^2$ de peinture ou de vernis. L'épaisseur sèche totale varie entre 0,1 et 0,2mm.

La peinture ou le vernis selon l'invention est destiné à être appliqué sur divers supports tels que par exemple du ciment, un parpaing, un panneau de mélaminé, une ancienne peinture, du plâtre, du bois, un métal, un plastique. Ces supports sont dit fermés. C'est-à-dire qu'un flux d'air ne peut pas, ou difficilement, les traverser. Ce type de support se distingue des supports tels que des filtres qui sont dits ouverts car un flux d'air peut aisément les traverser. Ce sont des supports non poreux, non fibreux.

La peinture selon l'invention peut être conditionnée dans un emballage plastique ou métallique. Dans le dernier cas, le vernis de l'emballage peut émettre du formaldéhyde en quantité négligeable, il est préféré de ne pas mettre en contact direct la peinture avec l'emballage. La peinture est par exemple conditionnée dans un emballage métallique comprenant une poche en polyéthylène qui fera barrière à une éventuelle réaction entre la fonction fixatrice du liant de la peinture et le formaldéhyde.

La peinture selon l'invention a été analysée en chambre Climpack de mesure selon la norme ISO 16000.

Le protocole expérimental est le suivant : l'échantillonnage est réalisé dans des chambres spécifiques aux essais suivant la norme ISO 16000-9. Leurs capacités est de 50.9 L. La température et l'humidité sont enregistrées sur chaque chambre tout au long de l'essai avec une mesure toutes les minutes.

L'étude du dégazage s'effectue sous flux d'air reconstitué. Cet air est ensuite humidifié. Les conditions de débit dans la chambre sont choisies pour répondre à la norme ISO 16000-9 « Air intérieur - Détermination des émissions de composés organiques volatiles de produits de construction et d'objets d'équipement - Partie 9 : méthode de la chambre d'essai d'émission (ISO/FDIS 16009-9:2005) ».

| Paramètres | Conditions |
|---|---|
| Volume de la chambre | $0.0509 \ m^3$ |
| Température | 23°C +ou- 2 °C |
| RH ('Relative Humidité) | 50 ± 5 % |
| Surface des éprouvettes | $0.0702 \ m^2$ |
| Débit d'air | 0.47 L/min |
| Taux de renouvellement de l'air (n) | $0.55 \ h^{-1}$ |
| Facteur de charge (L) | $1.4 \ m^2 m^{-3}$ |
| Taux de ventilation spécifique | $0.4 \ m^3 m^{-2} h^{-1}$ |
| Type de scenario | Mur |
| Durée de l'essai | 48h |

Les taux de renouvellement ainsi que les facteurs de charges respectent tous deux les limites fixées par le Ministère de l'Environnement qui sont respectivement de $0,25 \ h^{-1} < n < 1,5 \ h^{-1}$ et $L \leq 2 \ m^2.m^{-3}$.

Les moyennes de la température et l'humidité enregistrées tout au long de l'essai sont :

| Conditions | Température (°C) | Humidité (%) |
|---|---|---|
| Adsorption | 20.8 ± 0.4 | 49 ± 4 |
| Désorption | 21.5 ± 0.3 | 49 ± 3 |

Une concentration en formaldéhyde, titrée avec une incertitude de 10% entre 100 et 200 $\mu$g/m3 est injectée en continue dans la chambre d'essais. Des prélèvements sur 24h sans matériau ont été effectués afin de mesurer la concentration en amont de la chambre (Climpack 1). Ensuite, les mêmes prélèvements sont effectués avec les matériaux à l'intérieur de la chambre.

Enfin, le matériau est mis dans une autre chambre (Climpack 2), seulement balayée par de l'air propre, pendant 24h pour voir la désorption de la peinture en formaldéhyde.

Les prélèvements du formaldéhyde sont effectués sur cartouches DNPH.

Les conditions des prélèvements sont récapitulées dans le tableau ci-dessous, conformément aux normes ISO 16000 qui imposent un débit de prélèvement inférieur à 80% du débit de la chambre :

| Prélèvements | Lieu | Support | Nombre | Durée (min) | Débit (ml/min) |
|---|---|---|---|---|---|
| Formaldéhyde | Chambre d'adsorption (Climpack 1) | DNPH | 4 | 120 | 50 |
| Formaldéhyde | Chambre de désorption (Climpack 2) | DNPH | 5 | 180 | 50 |

L'analyse se fait par Chromatographie liquide haute performance. Cette technique repose sur la formation d'hydrazones par réaction entre les composés carbonylés et la 2,4-DNPH.

La cartouche DNPH est éluée par une fois 2mL d'acétonitrile et les aldéhydes sont analysés en HPLC détection UV.

La méthode suit la norme NF ISO 16000-3 (janvier 2002) Air intérieur - Partie 3 : dosage du formaldéhyde et d'autres composés carbonylés - Méthode par échantillonnage actif (Indice de classement : X43-404-3).

Adsorption en formaldéhyde :

| Temps d'exposition du matériau | Abattement (%) |
|---|---|
| 4h - 6h | 17 - 37 |

(suite)

| Temps d'exposition du matériau | Abattement (%) |
|---|---|
| 10h - 12h | 19 - 53 |
| 16h - 18h | 32 - 51 |
| 22h - 24h | 21 - 55 |

Désorption du matériau

| Temps d'exposition du matériau | Concentration en formaldéhyde ($\mu$g/m$^3$) |
|---|---|
| 24h-27h | <LQ |
| 27h-30h | <LQ |
| 33h-36h | <LQ |
| 39h-42h | <LQ |
| 45h-48h | <LQ |
| LQ signifiant Limited Quantity soit quantité limitée c'est-à-dire inférieure à 5$\mu$g/m$^3$ | |

Durée de vie de la peinture

La durée de vie de la peinture selon l'invention a été étudiée de manière théorique sur la base des paramètres ci-dessous :

Surface étudiée 0.070 - 0.078 m$^2$
Masse de peinture étudiée 15 - 20g
% de liant dans l'échantillon 6 - 12%
Débit d'air 0.47L/min

Pour les calculs, l'hypothèse faite est qu'une mole de liant réagit avec une mole de formaldéhyde.
Sachant que dans 100g de liant, il y a 0.05 mol de fonction fixatrice, nous avons déterminé la masse de formaldéhyde qui pourra être piégée avec le calcul suivant :

$$m_{for} = \left(m_{ech} \times \%Cl\right) \times \frac{nCl}{100} \times M_{for}$$

Avec
$m_{for}$ = masse maximal de formaldéhyde piégée (g)
$m_{ech}$ = masse de l'échantillon (g)
$\%_{Cl}$ = pourcentage de liant dans l'échantillon (%)
$n_{Cl}$ = nombre de mole de fonction fixatrice (mol)
$M_{for}$ = masse molaire du formaldéhyde (g/mol)
La masse de formaldéhyde pouvant être piégée au maximum sur la peinture est de 18.3 mg à 27.9 mg.
En utilisant la concentration en formaldéhyde moyenne donnée par l'OQAI pour l'air intérieur, qui est de 20$\mu$g/m$^3$, on calcule la masse de formaldéhyde adsorbée par minute sur chaque peinture.

$$\frac{m_{ad}}{min} = c_{for} \times E \times D$$

$m_{ad}$ = masse de formaldéhyde adsorbée (en ng)
$C_{for}$ = concentration en formaldéhyde (ng/L)

E = Efficacité d'adsorption (%)

D = débit d'air (L/min)

On obtient les résultats suivants :

Efficacité de piégeage 21 - 55%

Masse max de formaldéhyde adsorbé 18 - 28mg

Masse formaldéhyde piégée par minute 2 - 4,5 ng/min

Masse de formaldéhyde piégée par an 1 - 2,5 mg/an

Soit une durée de vie de 7 à 23 ans.

Les tests en chambre Climpack, et donc les résultats obtenus, correspondent à une pièce modèle selon la norme ISO 16000-9 qui a les caractéristiques suivantes : Surface sol : $7m^2$, Surface mur : $24m^2$, Volume de la pièce : $17.5m^3$

Il est à noter que l'invention porte sur la peinture ou le vernis et ne peut être définie seulement par son liant.

**Revendications**

1. Peinture ou vernis pour assainir l'air **caractérisée en ce qu'**elle comprend un liant comprenant un polymère acrylique ou alkyde portant au moins une fonction fixatrice de formaldéhyde destinée à réagir avec du formaldéhyde présent dans l'air pour le fixer de manière covalente et des additifs, comprenant au moins des charges, des solvants, des pigments et des adjuvants.

2. Peinture ou vernis selon la revendication précédente ayant pour formulation :

| Matière première | Teneur (%m/m) |
|---|---|
| Liant | 20 - 50 |
| Biocide | 0,25 |
| Epaississant | 1 - 3 |
| Dispersant | 0,3 |
| Carbonate | 0 - 10 |
| Talc | 0 - 15 |
| Dioxyde de titane | 15 - 25 |
| Agent neutralisant | 0,3 |
| Propylène glycol | 0,3 - 0,6 |
| Agent temps ouvert | 1 - 2 |
| Eau | 6 - 16 |

3. Peinture ou vernis selon l'une quelconque des revendications précédentes dans laquelle le pourcentage d'abattement de formaldéhyde de l'air est d'au moins 30% après 24H d'exposition.

4. Peinture ou vernis selon l'une quelconque des revendications précédentes dans laquelle la désorption est inférieure à $5\mu g/m^3$.

5. Procédé pour assainir de l'air **caractérisé en ce qu'**on applique une peinture ou un vernis selon l'une quelconque des revendications 1 à 4, et que la fonction fixatrice de formaldéhyde réagit avec du formaldéhyde présent dans l'air et le fixe de manière covalente.

6. Procédé selon la revendication précédente dans lequel le pourcentage d'abattement de formaldéhyde de l'air est d'au moins 30% après 24H d'exposition.

**7.** Procédé selon l'une quelconque des revendications 5 ou 6 dans lequel on forme un feuil continu de peinture.

**8.** Procédé selon l'une quelconque des revendications 5 à 7 dans lequel l'épaisseur sèche totale de la peinture est comprise entre 0,1 et 0,2mm.

**9.** Procédé selon l'une quelconque des revendications 5 à 8 dans lequel la peinture est appliquée sur un support fermé.

**10.** Procédé selon la revendication précédente dans lequel il n'y a pas de flux d'air traversant le support et la peinture.

Europäisches
Patentamt

European
Patent Office

Office européen
des brevets

**RAPPORT DE RECHERCHE EUROPEENNE**

Numéro de la demande

EP 14 17 0355

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 412 423 A1 (EASTMAN CHEM CO [US]) 1 février 2012 (2012-02-01) * le document en entier * ----- | 1-10 | INV. A61L9/014 B01D53/72 C09D5/00 C09D167/08 C09D133/02 |

DOMAINES TECHNIQUES RECHERCHES (IPC)

A61L
B01D
C09D

Le présent rapport a été établi pour toutes les revendications

| Lieu de la recherche | Date d'achèvement de la recherche | Examinateur |
|---|---|---|
| Munich | 7 juillet 2014 | Rouault, Yannick |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

| Document brevet cité au rapport de recherche | | Date de publication | Membre(s) de la famille de brevet(s) | | Date de publication |
|---|---|---|---|---|---|
| EP 2412423 | A1 | 01-02-2012 | EP | 2099323 A2 | 16-09-2009 |
| | | | EP | 2412422 A1 | 01-02-2012 |
| | | | EP | 2412423 A1 | 01-02-2012 |
| | | | US | 2008135060 A1 | 12-06-2008 |
| | | | WO | 2008073212 A2 | 19-06-2008 |

EPO FORM P0460